# EUROPEAN PATENT APPLICATION

(11) **EP 4 682 187 A1**
(43) Date of publication of application: **21.01.2026**
(21) Application number: 24771024.7
(22) Date of filing: 18.03.2024
(51) Int. Cl.: C08J 5/18, B32B 27/18, B32B 27/32, B65D 65/40, C08K 3/08, C08L 23/10

(54) **PACKAGING FILM**

(30) Priority: 16.03.2023 JP 2023042193
(71) Applicant: Toyo Seikan Co., Ltd., Tokyo 141-8640 (JP)
(72) Inventor: ISHIHARA, Takayuki, Yokohama-shi, Kanagawa 230-0001 (JP); UEDA, Kousuke, Yokohama-shi, Kanagawa 230-0001 (JP); HAMABE, Takeru, Yokohama-shi, Kanagawa 230-0001 (JP)
(74) Representative: J A Kemp LLP
(86) International application number: PCT/JP2024/010537
(87) International publication number: WO 2024/190922

(57) **Abstract**

The present invention provides a packaging film that is easy to heat-seal and has excellent anti-blocking performance. The packaging film has one surface formed of an iron powder-blended propylene-based resin layer, in which the one surface is a rough surface derived from the iron powder, and the rough surface has a surface roughness Sa (ISO25178) in a range from 1.0 to 10 µm.

## Description

### Technical Field

The present invention relates to a packaging film to be used for forming a bag-shaped container (pouch) and for other purposes.

### Background Art

Films made of an olefin-based resin, such as polypropylene or polyethylene; a polyester resin represented by poly(ethylene terephthalate) (PET); or the like have been widely used as packaging films because they can be easily made into bag-shaped containers (pouches) through adhesion by heat sealing. Among them, packaging films made of an olefin-based resin are inexpensive and are thus widely used especially as packaging films for food (see Patent Documents 1 and 2).

Meanwhile, with the diversification of foods in recent years, food-filled pouches are subjected to heat treatment, such as microwave heating and/or retort sterilization, and are required to have such properties as impact resistance and/or heat resistance. Thus, to satisfy such requirements, random polypropylene (random PP), block polypropylene (block PP), and the like have been proposed as resins for heat sealing (sealant resins) (see Patent Documents 3 and 4).

On the other hand, while random PP and block PP exhibit high impact resistance, there have been issues in that blocking easily occurs, the films adhere to each other and become difficult to separate from each other, or the film sticks to a conveyor belt or the like and easily causes a conveyance failure and the like. In addition, when a pouch is filled with a content, the inner surfaces of the pouch adhere to each other and cause problems, such as filling trouble occurring due to clogging.

### Citation List

### Patent Document

Patent Document 1: JP 2015-214352 A
Patent Document 2: JP 2020-097421 A
Patent Document 3: WO 2017/038349
Patent Document 4: JP 2021-050295 A

### Summary of Invention

### Technical Problem

Thus, an object of the present invention is to provide a packaging film that is easy to heat-seal and has excellent anti-blocking performance.

### Solution to Problem

As a result of studies on the above-described issues, the present inventors have found that blending an iron powder used as an oxygen absorber into an olefin-based resin can enhance not only oxygen barrier properties through oxygen absorption but also anti-blocking properties, thereby completing the present invention.

According to the present invention, there is provided a packaging film including a surface formed of an iron powder-blended propylene-based resin layer, the surface being a rough surface derived from the iron powder, and the rough surface having a surface roughness Sa (ISO25178) in a range from 1.0 to 10 µm.

In the packaging film of the present invention, the following aspects are suitably employed.
(1) In the iron powder-blended propylene-based resin layer, a metal halide in an amount from 0.1 to 10 parts by mass, and an alkaline substance in an amount from 0.5 to 2 parts by mass are blended per 100 parts by mass of the iron powder.
(2) On an other surface of the iron powder-blended propylene-based resin layer, an iron powder-unblended propylene-based resin layer is laminated, and an exposed surface of the iron powder-unblended propylene-based resin layer also reflects a roughness derived from the iron powder and is a rough surface having a surface roughness Sa (ISO25178) of 1.0 µm or more.
(3) The iron powder-unblended propylene-based resin layer has a thickness from 10 to 100 µm.
(4) On a surface of the iron powder-blended propylene-based resin layer opposite the rough surface, a vapor deposition film including a vapor deposition layer is laminated.

According to the present invention, there is also provided a packaging bag obtained by using the packaging film in which the iron powder-unblended propylene-based resin layer is provided, the packaging bag including another packaging film laminated on the rough surface of the iron powder-blended propylene-based resin layer with interposition of a dry laminating adhesive.

In the packaging bag,
(5) a surface of the iron powder-unblended propylene-based resin layer is suitably an inner surface that comes into contact with a material to be packaged, and
(6) the another packaging film suitably includes a polyester film, a polyamide film, or a barrier film including an inorganic vapor deposition layer.

### Advantageous Effects of Invention

In the packaging film of the present invention, an iron powder is blended in a layer of a propylene-based resin forming one surface. This allows the packaging film to have a characteristic in that the one surface is a rough surface having a surface roughness Sa (ISO25178) in a range from 1.0 to 10 µm. That is, at least one surface of the film is a rough surface with such a surface roughness Sa, and thus blocking between the films can be effectively suppressed. For example, as presented in Examples described later, such a rough surface is a slippery surface with a small coefficient of friction, and this results in exhibiting anti-blocking properties.

In the present invention, the presence of the iron powder blended in the propylene-based resin on the surface is reflected in the surface roughness Sa of the surface, and the iron powder is used as an oxygen absorber (also referred to as a deoxidizer). That is, a small amount of an auxiliary agent (such as a metal halide or an alkali compound) used in combination with an iron powder in the oxygen absorber is blended in the propylene-based resin layer on the surface. This imparts oxygen absorbability and enables to exhibit oxygen barrier properties, which is another great advantage of the present invention.

The packaging film particularly preferably has a two-layer structure in which the iron powder-unblended propylene-based resin layer is laminated on the other surface of the iron powder-blended propylene-based resin layer. This makes it possible to form a packaging bag by utilizing the iron powder-unblended propylene-based resin layer as a sealant (heat-seal layer).

Such a packaging bag can have a structure in which another packaging film is laminated on the rough surface of the iron powder-blended propylene-based resin layer using a dry laminating adhesive.

### Description of Embodiments

In a packaging film according to an embodiment of the present invention, one surface is formed by an iron powder-blended propylene-based resin layer, which is an essential condition. The simplest layer structure is composed of a single layer of the iron powder-blended propylene-based resin layer, but the packaging film may of course have a multilayer structure in which another or other resin layers are laminated on the iron powder-blended propylene-based resin layer.

### Iron Powder-Blended Propylene-Based Resin Layer;

First, this layer is exposed on at least one surface of the packaging film, and the exposed surface is a rough surface having a surface roughness Sa (ISO25178) in a range from 1.0 to 10 µm, and particularly from 1.0 to 5.0 µm. Being such a rough surface, this surface has a small coefficient of dynamic friction (µ_{D}), of suitably less than 2.0, and more suitably in a range from 0.5 to 1.1, and the packaging film according to an embodiment of the present invention has high anti-blocking properties. For example, with a surface roughness Sa smaller than the above range, the coefficient of dynamic friction of the surface would increase, impairing the anti-blocking properties. Note that the surface roughness Sa larger than the above-described range would cause issues, such as misalignment in roll winding during film formation and/or easy occurrence of wrinkles on the surface.

The surface roughness Sa is a parameter obtained by three-dimensional expansion of the line roughness Ra (arithmetic mean height of a line) and is an average value of absolute values of differences in height of each measurement point from the average surface in a certain reference region. In an embodiment of the present invention, the reason for not using the line roughness Ra but using the surface roughness Sa as a roughness parameter is that the variation depending on the measurement region is smaller than that of the line roughness Ra.

Note that the iron powder-blended propylene-based resin layer has the surface roughness Sa described above, and this surface roughness Sa is derived from the iron powder blended in the layer. Thus, this resin layer is an unstretched layer or an unstretched film and can be referred to as a CPP layer or a CPP film.

The thickness of the iron powder-blended propylene-based resin layer can be appropriately determined according to the average particle size and content of the iron powder to be blended or the application but is preferably in a range from 5 to 100 µm.

The propylene-based resin to be used in the layer usually has an extrusion grade MFR, in which the MFR is about from 1.0 to 50 g/10 min at 230°C. As such a polypropylene, any of homo polypropylene (homo PP), random polypropylene (random PP), and block polypropylene (block PP) can be used, but homo PP is unsatisfactory in terms of impact resistance. Thus, in an embodiment of the present invention, random PP and block PP excellent in this property are suitably used. In particular, random PP and block PP with high impact resistance have high flexibility and are rubber-like and thus easily cause blocking. However, in an embodiment of the present invention, blending the iron powder enhances the anti-blocking properties. Thus, these PPs are suitably used by taking advantage of an embodiment of the present invention.

In an embodiment of the present invention, random PP is obtained by copolymerizing polypropylene with a small amount of ethylene and has a large amount of an amorphous portion. Thus, random PP has lower rigidity than homo PP but is excellent in impact resistance and flexibility. Random PP particularly easily causes blocking and thus is most suitable for taking advantage of an embodiment of the present invention.

Note that block PP, which is also referred to as impact polypropylene (impact PP), has a structure in which a rubber component, such as an ethylene-propylene copolymer (EPR) and/or a styrene-butadiene copolymer (SBR), is dispersed in a matrix of homo PP and/or random PP. Dispersion of such a rubber component significantly improves impact resistance strength, and block PP further exhibits high heat resistance as well.

That is, block PP has a structure in which the rubber component is dispersed in the form of islands but may further be blended with a small amount of a modifying resin, for example, linear low-density polyethylene (LLDPE), to adjust the physical properties. The modifying resin is a component for enhancing the compatibility between polypropylene (PP), which is a matrix, and an ethylene-propylene copolymer (EPR), and for greatly improving the dispersibility of EPR in PP to allow EPR to sufficiently exhibit the effect of improving impact properties. In the block PP, the amounts of the rubber component and the modifying resin are adjusted so as to obtain desired physical properties.

In addition, against the backdrop of the growing environmental awareness in recent years, a part of the propylene-based resin used in the iron powder-blended propylene-based resin layer and/or the iron powder-unblended propylene-based resin layer, or its raw material or a part of the raw material, may include not only a petroleum-derived material but also a material chemically recycled from waste plastic through a monomerization technology, such as gasification and/or oilification, or even a material produced from a biomass material, such as a plant-derived material. The biomass content can be measured by radiocarbon concentration measurement or the like.

Furthermore, when the propylene-based resin is produced, in the polymerization stage from raw materials, production is preferably carried out by a catalyst system without using substance of very high concern (SVHC) (Substance of Very High Concern in Registration, Evaluation, Authorization and Restriction of Chemicals (REACH) regulation in Europe), such as a phthalate ester compound, from the perspective of reducing environmental impact.

Moreover, it is effective in terms of environmental appeal to blend the propylene-based resin layer with a mechanically recycled material obtained from a resin waste generated during the production of a packaging material and/or a commercialized plastic product that has been recovered from the market, separated, washed, and re-pelletized.

In an embodiment of the present invention, an iron powder is blended in the above-described propylene-based resin layer, and this iron powder forms the rough surface with the surface roughness Sa described above. That is, an appropriate amount of iron powder according to its particle size is blended in the propylene-based resin layer so as to obtain the surface roughness Sa as described above. The iron powder is preferably contained in a range from 1 to 40 mass% in the iron powder-blended propylene-based resin layer, although the content is not limited to this range.

Note that iron is a metal having oxygen absorbability (scavenging of oxygen), which allows the iron powder-blended propylene-based resin layer present on the packaging film surface to exhibit oxygen absorbability and imparts oxygen barrier properties.

An oxygen absorber containing iron powder is known, for example, from JP 5378639 B and JP 4893978 B, and is usually used as a powder with a BET specific surface area of 0.5 m²/g or more. Examples of such an iron powder include reduced iron powder, atomized iron powder, electrolytic iron powder, and carbonyl iron powder, but reduced iron powder is suitably used in terms of high oxygen-absorbing ability. That is, this is because the reduced iron powder is obtained by reducing iron ore and has a large specific surface area. Among reduced iron powders, a rotary reduced iron powder is particularly suitable because of its high purity. Furthermore, the full width at half maximum of a peak at the (110) plane of iron measured by powder X-ray diffraction method (Co-Kα) is suitably 0.20°/2θ or less in terms of preventing the generation of hydrogen by-produced by the oxygen absorption reaction. The full width at half maximum of a peak of the (110) plane of such an iron can be adjusted by heat-treating the iron under certain conditions.

In addition, in the case of utilizing the oxygen absorbability of the iron powder, a metal halide or an alkaline compound is used as an auxiliary agent in combination with the iron powder.

The metal halide functions as an auxiliary agent for promoting the oxygen absorption reaction and is a halide of a metal of various types (e.g., such as an alkali metal, an alkaline earth metal, copper, zinc, or iron). Examples of the metal halide include sodium chloride, sodium bromide, sodium iodide, potassium chloride, potassium bromide, potassium iodide, calcium chloride, magnesium chloride, and barium chloride. In particular, sodium chloride is most suitable in terms of performance as an auxiliary agent and cost.

Such a metal halide may be used in a smaller amount than the iron powder and is used in an amount of, for example, from 0.1 to 10 parts by mass and particularly from 1 to 5 parts by mass per 100 parts by mass of the iron powder.

Note that the alkaline compound absorbs water and allows the oxygen absorption reaction by the iron powder to proceed, and for example, magnesium hydroxide, calcium hydroxide, strontium hydroxide, barium hydroxide, magnesium carbonate, calcium carbonate, strontium carbonate, barium carbonate, or the like can be used. In particular, a non-carbonate-based compound is preferred in terms of avoiding foaming, and slaked lime (calcium hydroxide) and/or quicklime (calcium oxide) is suitably used.

Such an alkaline compound may also be used in a smaller amount than the iron powder and is used in an amount of, for example, from 0.5 to 2 parts by mass and particularly from 1 to 2 parts by mass per 100 parts by mass of the iron powder.

The oxygen absorber containing the iron powder as described above is appropriately pulverized and dispersed in the olefin-based resin described above as a mixed powder with an average particle size (median size) of about from 1 to 40 µm.

An additive of various types can be added to the iron powder-blended propylene-based resin layer described above as long as the surface roughness Sa of the layer is in a certain range. However, to ensure the recyclability of the iron powder, it is desirable not to add another additive, and furthermore, it is also suitable to avoid addition of a resin other than the propylene-based resin in terms of recyclability.

### Layer Structure of Packaging Film;

The packaging film according to an embodiment of the present invention can have a layer structure of various types, as long as the film has the iron powder-blended propylene-based resin layer on at least one surface.

For example, the packaging film according to an embodiment of the present invention may have a single-layer structure including the above-described iron powder-blended propylene-based resin layer only, that is, a single-layer film. Both surfaces of such a single-layer film are rough surfaces with the surface roughness Sa described above, and this can exhibit the anti-blocking properties at the maximum. That is, such a single-layer packaging film is wound and held on a roll, and at an appropriate time, the films are adhered to each other by heat sealing to make a bag, and the film can be provided as a bag-shaped container (pouch). For such a bag-shaped container, the film can be rapidly pulled out from the roll, and a bag not filled with a content can be conveyed without causing conveying clogging or the like, providing extremely high productivity.

In addition, the single-layer packaging film is attached to the opening of a cup container and can also be used as a lid material.

Furthermore, the single-layer packaging film wound and held on a roll is drawn out, and another resin film or the like can be attached to the film using an epoxy-based or urethane-based dry laminating adhesive to form a multilayer structure.

Examples of another resin film to be attached to the single-layer packaging film using an adhesive include polyester films, such as poly(ethylene terephthalate) (PET); and polyamide films, such as nylon 6 and nylon 6,6. These films may be stretched and highly reinforced. Such a film having a multilayer structure in which another resin is laminated can also be used as a pouch by heat sealing using the above-described iron powder-blended propylene-based resin layer as a sealant or can also be used as a lid material for a cup-shaped container. Furthermore, the film can also be utilized to form a cup container by performing thermoforming, such as plug-assist forming or vacuum forming. Moreover, a PET film, which is a so-called barrier film, on which a vapor deposition layer of silicon oxide or aluminum oxide is formed, can be laminated on the above-described single-layer packaging film, and this can also be used to form a pouch.

The single-layer packaging film to be used for the various applications described above has a thickness suitable for each application.

In addition, in an embodiment of the present invention, the packaging film can be a film having a multilayer structure, obtained by co-extrusion, including the above-described iron powder-blended propylene-based resin layer and an iron powder-unblended propylene-based resin layer. Examples of a method for producing such a film include inflation and casting methods. In particular, a casting method ensures the desired surface roughness derived from the iron powder and thus is a suitable production method. When a molten resin from a T-die is formed into a film, the film is cooled by a cooling roll and an air knife. This restricts the surface shape of one side of the film by the cooling roll and makes it easy to form the opposite film surface on the air knife side with increased surface roughness.

Such a packaging film having a multilayer structure in which an iron powder-unblended propylene-based resin layer is laminated can be used as a pouch by heat-sealing the iron powder-unblended propylene-based resin layer as an inner layer on the side that comes into contact with a content. Such a pouch is advantageous in that the layer blended with the iron powder does not come into contact with a material inside.

In an embodiment of the present invention, in the packaging film having a multilayer structure as described above, the propylene-based resin used for forming the iron powder-unblended propylene-based resin layer is not particularly limited, and polypropylene of various types can be used. In particular, block PP is most suitable in terms of high impact resistance and high heat resistance, such as retort resistance.

Furthermore, in the multilayer structure, the thickness of the iron powder-unblended propylene-based resin layer is preferably as small as possible within a range that allows an appropriate heat seal strength to be ensured. The thickness is preferably, for example, about from 10 to 100 µm. With such a small thickness, the surface of the iron powder-unblended propylene-based resin layer can also be a rough surface reflecting the roughness due to the iron powder blended in the iron powder-blended propylene-based resin layer and can have a rough surface with a surface roughness Sa of, for example, 1.0 µm or more and particularly 1.5 µm or more. This allows both surfaces of the packaging film having the multilayer structure to exhibit anti-blocking properties and not only can reliably prevent blocking between the films but also can avoid a conveyance failure by the excellent anti-blocking properties even when either surface of the film is in contact with a conveyance member.

The packaging film according to an embodiment of the present invention is particularly effective for an application for forming a packaging bag using the film having a structure in which the iron powder-unblended propylene-based resin layer is laminated on the iron powder-blended propylene-based resin layer. That is, this packaging film has anti-blocking properties and thus allows smooth operations, such as unwinding from a roll. In addition, another packaging film can be easily laminated on the rough surface of the iron powder-blended propylene-based resin layer using the dry laminating adhesive described above, and a packaging bag can be easily obtained by bag making (attaching by heat sealing) using such a laminate. To such a packaging bag, properties of another packaging film, such as, for example, piercing strength and gas barrier properties, are imparted. In addition, such a packaging bag also allows, for example, a smooth operation of filling a content by the anti-blocking properties exhibited by the iron powder-unblended propylene-based resin layer surface of the inner surface.

### Examples

The present invention will be described by the following examples.

Various measurement methods employed in the following examples are as follows.

### Surface Roughness Sa (unit in µm);

A 10 mm x 10 mm sample piece was cut out from a prepared film.

The shape of the film outer surface was measured using a non-contact surface shape measuring device (available from Zygo Corporation). For the measurement and image analysis, MetroPro (Ver. 9.1.4 64-bit) was used as an application.

An area of 282 µm x 212 µm was measured, wavelengths of 1.326 µm or less were cut from the resulting raw data to remove noise, and the resulting data was used as measurement data.

An average value was determined with N = 5.

### Coefficient of Dynamic Friction (µ_{D});

The sample was evaluated with a coefficient of friction measuring device (available from Toyo Seiki Seisaku-sho, Ltd.) in accordance with JIS K7125 "Plastics-Films and Sheets - Coefficient of Friction Test Method".

The sample was placed on an SUS substrate with a contact area of 40 cm² (63 mm x 63 mm) and a load of 200 g to measure the coefficient of dynamic friction.

A sample with a coefficient of dynamic friction of less than 2.0 had good sliding properties and thus was determined as O.

In addition, a sample with a coefficient of dynamic friction of 2.0 or more or a sample that caused blocking and did not slip was determined as ×.

### Oxygen Absorption Performance;

A prepared film was cut into 3 cm x 4 cm pieces, and 10 pieces were placed in an oxygen-impermeable container with an internal volume of 85 cc [hiRETOFLEX: HR78-84 available from Toyo Seikan Co., Ltd. (cup-shaped laminated vessel made of polypropylene/steel foil/polypropylene)]. Furthermore, 1 cc of distilled water was added, and the oxygen-impermeable container was heat-sealed with a lid material of polypropylene (inner layer)/aluminum foil/polyester (outer layer) in the atmosphere (oxygen concentration 20%).

This was stored at 50°C for 24 hours, and the oxygen concentration in the container was measured by gas chromatography.

A sample resulting in an oxygen concentration below 20% was determined as ○, and a sample resulting in an unchanged oxygen concentration at 20% was determined as ×.

In addition, the following iron powder was used in the examples.

### Iron Powder;

Specific surface area: 1.8 m²/g
Average particle size (D₅₀): 21 µm

### Example 1

Pellets were prepared in advance by blending 29 wt.% of the above-described iron powder with a random PP resin (MFR 1.20 g/10 min at 230°C, melting point 164°C, impact strength Izod at 23°C of 150 J/cm).

These pellets were used to prepare a single-layer film with a thickness of 30 µm with a Labo Pla film forming machine (available from Toyo Seiki Seisaku-sho, Ltd.), and the surface roughness Sa and the coefficient of dynamic friction (µ_{D}) were determined.

The film forming conditions were an extruder temperature of 210°C and a T-die of 230°C. The cooling roll temperature was set at 25°C.

Measurement results are presented in Table 1.

The film surface was clearly uneven and had a low coefficient of friction. This is because the iron powder was blended, thus roughing the surface.

### Example 2

A single-layer film was prepared in the same manner as in Example 1 except that the thickness was changed to 50 µm. Measurement results are presented in Table 1.

Similarly as in Example 1, the surface roughness was large, and the coefficient of friction was low.

The reason for the larger value of the surface roughness than that in Example 1 is presumed to be due to a significant effect of the difference in cooling rate and stretchability during film formation between the part where the iron powder was present and the resin part in the film. That is, it is assumed that the resin part had higher stretchability and stretched more than the part where the iron powder was present and thus increased the numerical value of the roughness.

### Example 3

A coextruded two-layer film was formed using two extruders. The equipment used and the extrusion conditions were as described above.

One layer was an iron powder-blended layer (thickness 30 µm) formed using the same resin pellets as in Example 1, and the other layer (inner layer) was an iron powder-unblended propylene-based resin layer (thickness 60 µm).

In the iron powder-unblended propylene-based resin layer, a random PP (MFR 1.20 g/10 min at 230°C, melting point 164°C, impact strength Izod at 23°C of 150 J/cm) was used.

For the inner layer surface of the resulting two-layer film, the surface roughness Sa and the coefficient of dynamic friction (µ_{D}) of the iron powder-unblended propylene-based resin layer were determined and are presented in Table 1.

The resulting film had a large surface roughness and a low coefficient of friction. This is assumed to be because of the roughness of the metallic iron-containing layer as a base being largely reflected and the effect of the iron powder. The reason for the larger value of the surface roughness than that in Example 1 is assumed to be because the resin part was stretched due to the high cooling rate and stretchability as described in Example 2.

### Example 4

A two-layer film was prepared in the same manner as in Example 3 except that the thickness of the iron powder-unblended propylene-based resin layer (inner layer) was changed to 30 µm, and the surface roughness Sa and the coefficient of dynamic friction (µ_{D}) of the iron powder-unblended propylene-based resin layer were determined in the same manner and are presented in Table 1.

The resulting film had a large surface roughness and a low coefficient of friction. This is assumed to be because of the roughness of the metallic iron-containing layer as a base being largely reflected and the effect of the iron powder.

### Comparative Example 1

Using a random PP (MFR 1.20 g/10 min at 230°C, melting point 164°C, impact strength Izod at 23°C of 150 J/cm), which was the same resin used in Examples 1 to 4, a 30-µm single-layer film was prepared in the same equipment under the same film forming conditions as in Example 1. The surface roughness Sa and coefficient of dynamic friction (µ_{D}) were determined and are presented in Table 1.

The film had a lower surface roughness and a higher coefficient of dynamic friction than that of Example 1 and did not slip on the SUS plate and was not measurable.

### Comparative Example 2

A single-layer film was prepared in the same manner as in Comparative Example 1 except that the film thickness was changed to 60 µm, and the surface roughness Sa and the coefficient of dynamic friction (µ_{D}) were determined and are presented in Table 1.

This single-layer film also had a lower surface roughness and a higher coefficient of dynamic friction than that of Example 1 and did not slip on the SUS plate and was not measurable.

### Comparative Example 3

A coextruded two-layer film was formed in the same manner as in Example 3 except that the thickness of the random PP was changed to 200 µm. The surface roughness Sa and the coefficient of dynamic friction (µ_{D}) of the iron powder-unblended propylene-based resin layer were determined and are presented in Table 1.

This single-layer film also had a lower surface roughness and a higher coefficient of dynamic friction than that of Example 1 and did not slip on the SUS plate and was not measurable.

**[Table 1]**

| | Fe concentration (wt.%) | Film and thickness | Surface roughness Sa (µm) | Coefficient of dynamic friction (µ_{D}) | Oxygen absorption performance |
|---|---|---|---|---|---|
| Example 1 | 29 | Fe-blended film | 1.95 | ○ | ○ |
| | | 30 µm | | 0.68 | |
| Example 2 | 29 | Fe-blended film 50 µm | 2.86 | ○ 0.66 | ○ |
| Example 3 | 29 | Fe-blended layer/Random PP layer (two-layer film) 30 µm/60 µm | 2.28 | ○ 1.06 | ○ |
| Example 4 | 29 | Fe-blended layer/Random PP layer (two-layer film) 30 µm/30 µm | 2.43 | ○ 0.94 | ○ |
| Comparative Example 1 | 0 | Random PP single layer 30 µm | 0.65 | × Not slipped | × |
| Comparative Example 2 | 0 | Random PP single layer 60 µm | - | × Not slipped | × |
| Comparative Example 3 | 29 | Fe-blended layer/Random PP layer (two-layer film) 30 µm/200 µm | 0.65 | × Not slipped | ○ |

## Claims

1. A packaging film, comprising a surface comprising an iron powder-blended propylene-based resin layer, the surface being a rough surface derived from the iron powder, and the rough surface having a surface roughness Sa (ISO25178) in a range from 1.0 to 10 µm.

2. The packaging film according to claim 1, wherein in the iron powder-blended propylene-based resin layer, a metal halide in an amount from 0.1 to 10 parts by mass, and an alkaline substance in an amount from 0.5 to 2 parts by mass are blended per 100 parts by mass of the iron powder.

3. The packaging film according to claim 1 or 2, wherein on an other surface of the iron powder-blended propylene-based resin layer, an iron powder-unblended propylene-based resin layer is laminated, and an exposed surface of the iron powder-unblended propylene-based resin layer also reflects a roughness derived from the iron powder and is a rough surface having a surface roughness Sa (ISO25178) of 1.0 µm or more.

4. The packaging film according to claim 3, wherein the iron powder-unblended propylene-based resin layer has a thickness from 10 to 100 µm.

5. The packaging film according to claim 1 or 2, wherein on a surface of the iron powder-blended propylene-based resin layer opposite the rough surface, a vapor deposition film comprising a vapor deposition layer is laminated.

6. A packaging bag obtained by using the packaging film described in claim 4, the packaging bag comprising another packaging film laminated on the rough surface of the iron powder-blended propylene-based resin layer with interposition of a dry laminating adhesive.

7. The packaging bag according to claim 6, wherein a surface of the iron powder-unblended propylene-based resin layer is an inner surface that comes into contact with a material to be packaged.

8. The packaging bag according to claim 6 or 7, wherein the another packaging film comprises a polyester film, a polyamide film, or a barrier film comprising an inorganic vapor deposition layer.
